# EUROPEAN PATENT SPECIFICATION

(11) **EP 4 627 229 B1**
(45) Date of publication and mention of the grant of the patent: **05.08.2026**
(21) Application number: 24702101.7
(22) Date of filing: 25.01.2024
(51) Int. Cl.: F16H 25/22, F16H 25/24, F16J 15/3208, F16J 15/3284, F16J 15/34

(54) **WIPER SEAL ASSEMBLY FOR A BALL SCREW ACTUATOR**
ABSTREIFERDICHTUNG FÜR EINEN KUGELGEWINDETRIEB
JOINT D'ÉTANCHÉITÉ RACLEUR POUR ACTIONNEUR À VIS À BILLES

(30) Priority: 25.01.2023 US 202363481568 P; 22.01.2024 US 202418419538
(43) Date of publication of application: 08.10.2025
(73) Proprietor: Trelleborg Sealing Solutions U.S., Inc., Fort Wayne, IN 46803 (US); Trelleborg Sealing Solutions Germany GmbH, 70565 Stuttgart (DE)
(72) Inventor: MACY, Taylor, South Whitley, Indiana 46787 (US)
(74) Representative: Kohler Schmid Möbus Patentanwälte
(86) International application number: PCT/EP2024/051701
(87) International publication number: WO 2024/156776

(56) References cited:
- EP-B1- 3 428 481
- US-A- 4 053 167
- US-A- 4 150 835

## Description

### FIELD OF THE INVENTION

The present invention generally relates to seals. More particularly, the present invention relates to a ball screw seal for a ball screw actuator used in aerospace and industrial applications.

### BACKGROUND OF THE INVENTION

A wiper seal assembly according to the preamble of claim 1 is known from EP 3 428 481 B1.

Ball screw actuators need seals to seal grease within the actuator. Furthermore, these seals should be able to break externally formed ice while keeping external debris from ingressing (i.e., entering) into the actuator and other flight systems. Current solutions that have been designed are not fully successful in applications with high temperature variability and have had issues with drag. The present invention overcomes these drawbacks.

Prior art publication and patents include but are not limited to the following: EP 3 392 526 B1; EP 3 428 481 B1; US 4,905,533; US 10,612,633; KR 101 584 435 B1; US 697 639 9B2; JP 492 362 4B2; JP 492 362 4B2; US 201 403 524 70A1; JP 364 759 7B2; US 802 512 8B2; US 490 553 3A; and EP 3 428 481 B1. Further, US 4 150 835 A discloses a seal for a threaded shaft which reciprocates relative to a housing. The seal includes radial reinforcing means to provide an interference sealing fit with the housing and a thread on its internal surface which mates with the shaft. An axial reinforcing ring together with a hard rubber permits the seal to accept large axial forces.

### SUMMARY OF THE INVENTION

According to the present invention, there is provided a wiper seal assembly for a ball screw actuator as described in claim 1. Advantageous embodiments are described in the dependent claims. The ball screw actuator is configured to have an outer housing 2 with a shaft 3 disposed therein. Both the outer housing and the shaft are disposed about a longitudinal axis 4. A plurality of roller balls 5 are movably captured within a roller ball screw thread 6. The roller ball screw thread has an outer helical raceway 7 divided by an outer helical crest 8 which are formed in an inside surface 9 of the outer housing. The roller ball screw thread also has an inner helical raceway 10 divided by an inner helical crest 11 which are formed in the outer surface 12 of the shaft.

The wiper seal assembly comprises an annularly shaped elastomeric seal element 21 disposed about the longitudinal axis configured to separate a grease side 14 from an environmental side 15. The wiper seal assembly also includes an annularly shaped internal support 22 disposed about the longitudinal axis and disposed at least partially within the seal element.

The seal element comprises: a first arcuate surface 23 configured to be disposed in the inner helical raceway of the shaft and facing the environmental side; a second arcuate surface 26 configured to be disposed in the inner helical raceway of the shaft and facing the grease side; and an ice scraper seal 29 facing the environmental side and configured to make contact in at least 360 degrees around the longitudinal axis to or near the inner helical crest of the shaft. The first arcuate surface, the second arcuate surface and the ice scraper are configured to seal the environmental side apart from the grease side when the wiper seal assembly is installed in the ball screw actuator.

A first arcuate lip 24 extends from the first arcuate surface towards the environmental side and is configured to make contact with the inner helical raceway of the shaft. A first tapered backside 25 extends away from the first arcuate surface in an opposite direction of the first arcuate lip. The first tapered backside is configured to draft away from the inner helical raceway as it moves further from the first arcuate surface.

According to a preferred embodiment of the invention, the wiper seal assembly may comprise a second arcuate lip 27 which extends from the second arcuate surface towards the grease side and is configured to make contact with the inner helical raceway of the shaft. A second tapered backside 28 may extend away from the second arcuate surface in an opposite direction of the second arcuate lip. The second tapered backside is configured to draft away from the inner helical raceway as it moves further from the second arcuate surface. The first tapered backside merges into and connects to the second tapered backside.

### BRIEF DESCRIPTION OF THE DRAWINGS

FIGURE 1 is a front view of an exemplary embodiment of a wiper seal assembly of the present invention;
FIGURE 2 is an isometric view of the structure of FIG. 1;
FIGURE 3 is a sectional view of the structure of FIG. 2 taken along lines 3-3;
FIGURE 4 is an enlarged view taken from the structure of FIG. 3 along lines 4-4;
FIGURE 5 is a side view of the structure of FIG. 3;
FIGURE 6 is another enlarged sectional view similar to FIG. 4 but from a slightly different perspective;
FIGURE 7 is an enlarged view of the structure of FIG. 1 better showing the first and second seals that fit in the inner helical raceway of the shaft;
FIGURE 8 is enlarged isometric view of the structure of FIG. 7 from an opposite side better showing the grease sealing surfaces;
FIGURE 9 is a simplified sectional view of a ball screw actuator without a wiper seal assembly;
FIGURE 10 is similar to the simplified sectional view of the ball screw actuator now with an embodiment of a wiper seal assembly of the present invention; and
FIGURE 11 is a theoretical sectional view taken along the helical thread of the ball screw actuator showing the first and second arcuate surfaces for a better understanding.

### DETAILED DESCRIPTION OF EMBODIMENTS OF THE INVENTION

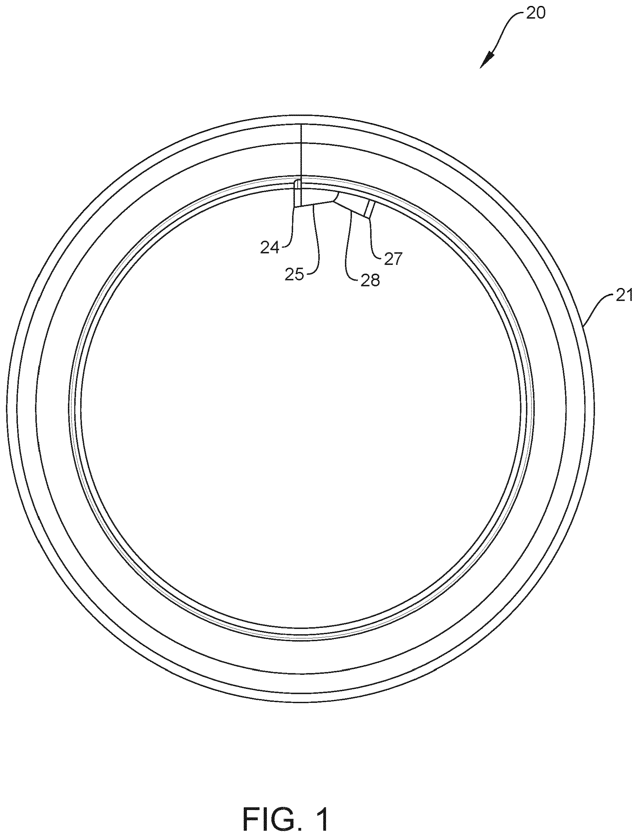

Reference is now made to FIGURES 1-8. The present invention design is for a ball screw seal that uses a high durometer rubber to seal from the environment, seal in grease, seal on the O.D. against the bore, and also features a rubber ice scraper with a Shore A durometer range of 75-90. This seal also includes a solid metal case that will be used to help support the sealing against the bore. The rubber portion of the seal follows the helical design of the screw thread with the ice scraper going around the thread for one full rotation (360°) and will seal against the major diameter of the thread in the axial direction (environment side). Along with the ice scraper the design has a mirrored dual lip sealing portion that will seal the environment from one side and seal in grease from the other. This portion of the seal will be sealing along the minor diameter of the thread and has a cupped lip design that also drafts away from the sealing surface on both sides. This allows the rubber lip to have some flexibility which will decrease the amount of friction and drag caused by the sealing lip. The mirrored dual lips only go around approximately 20° of the circumference. By using rubber in this design, the seal can both allow flexibility to reduce friction and also can handle larger tolerances within the hardware.]

FIGURE 1 is a front view of a wiper seal of the present invention.

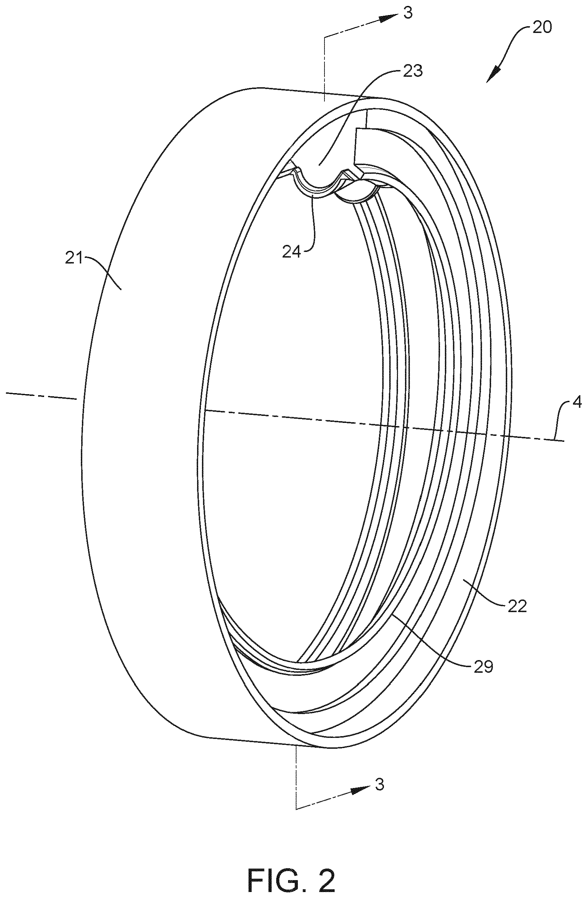

FIGURE 2 is an isometric view of the structure of FIG. 1.

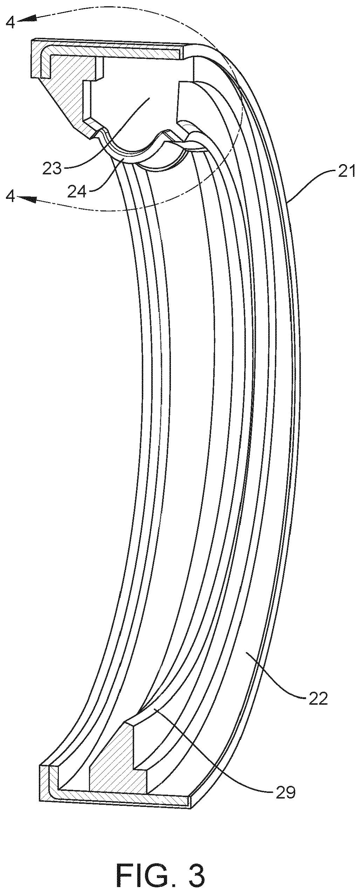

FIGURE 3 is a sectional view of the structure of FIG. 1.

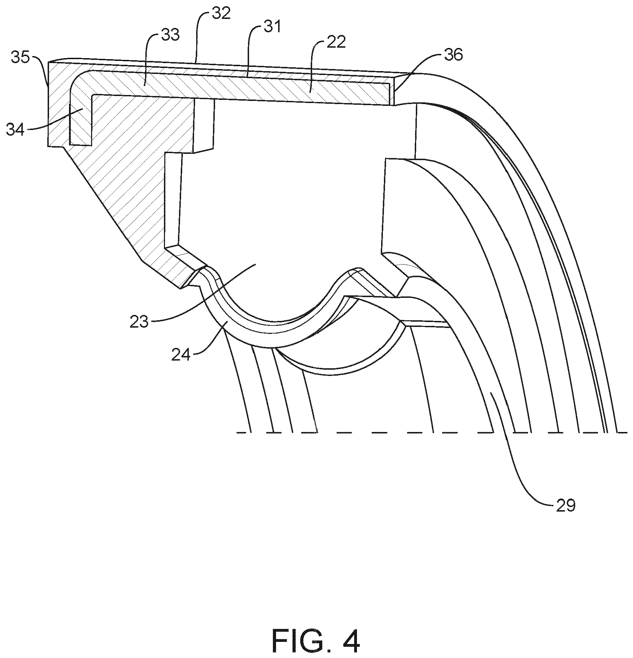

FIGURE 4 is an enlarged view taken from FIG. 3.

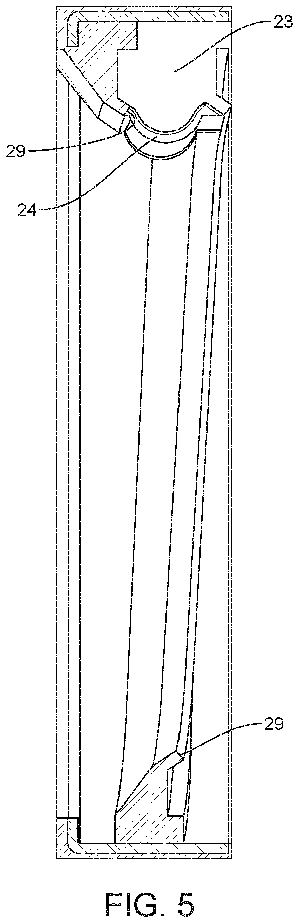

FIGURE 5 is a side view of the structure of FIG. 3.

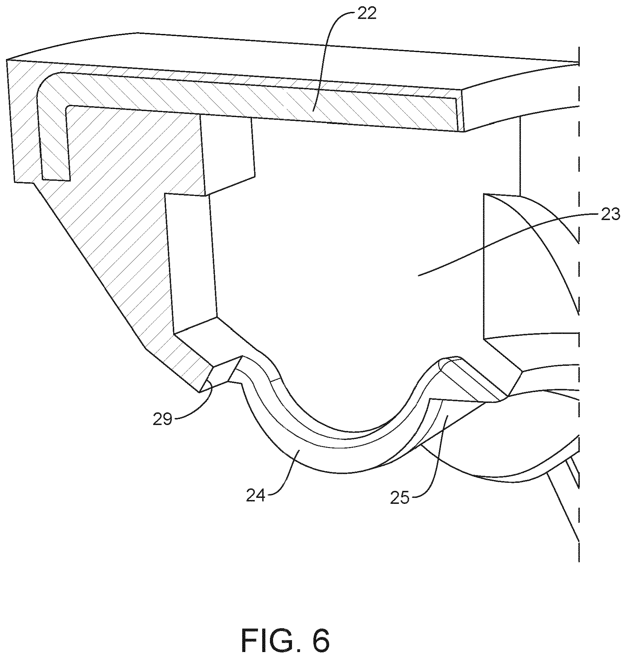

FIGURE 6 is an enlarged view of the structure of FIG. 1 inside a housing.

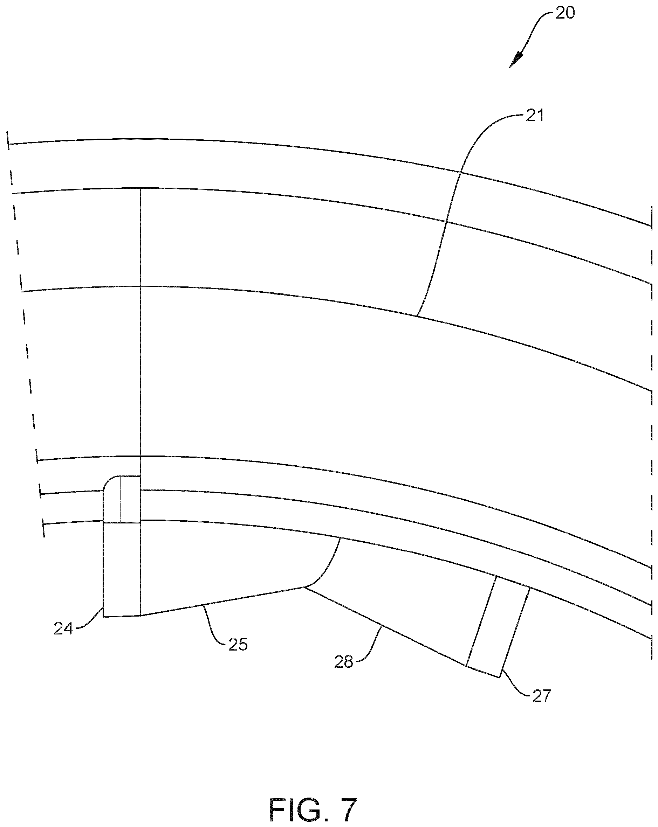

FIGURE 7 is an enlarged view from FIG. 1 better showing the wiper.

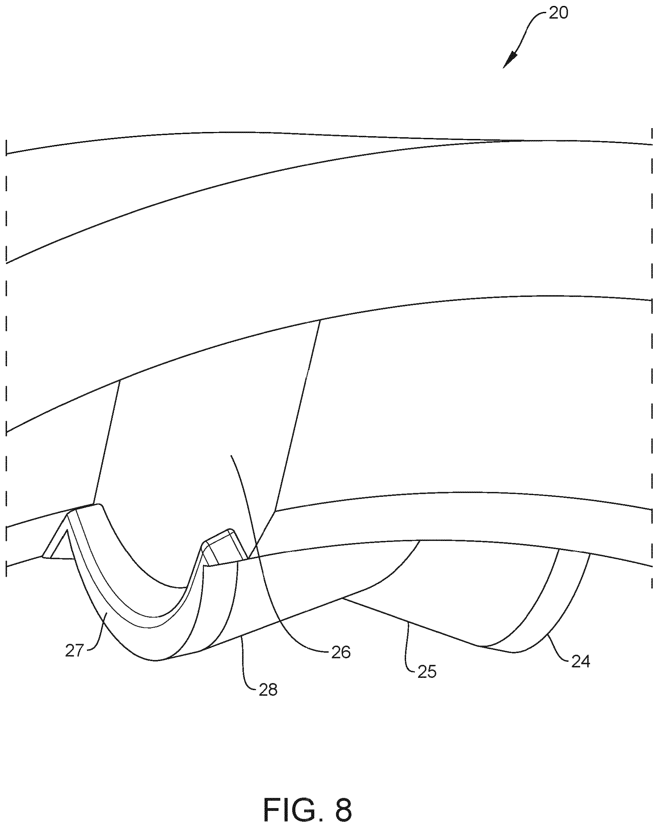

FIGURE 8 is enlarged isometric view of the structure of FIG. 1 better showing the seal for the grease and the seal for the environment.

As shown in FIGS. 1-8, the elastomer contact scraper is supported by a metal can (i.e., frame, support) as best shown in FIGS. 3-6. The rubber outer diameter provides the outer diameter grease sealing. A cupped scraper removes ice along the ball screw thread. The present invention is designed to be lower contact with the surface to promote lower drag sealing.

The metal can adds structural support to the wiper seal assembly. The metal can be made from a variety of metals known to those skilled in the art. Furthermore, the can may also be made from plastics, composites, metals or any combination thereof. The can may be bonded or adhered to the elastomer contact scraper or the elastomer contact scraper may be over-molded onto the can.

This seal is designed in a helical shape to seal around the outer diameter of the seal with elastomer contact as well as seal along the thread of the screw. The seal will have a sealing lip that will seal on the minor diameter against the environment but will also have a sealing lip mirrored on the other side to seal in the grease. The design will also have a scraper lip that runs along the major diameter of the thread that will scrape off ice in the axial direction.

The scraper seals about 360°, but the secondary seals that seal along the minor diameter on both the environment and grease side only goes around the circumference around 20°.

The difference of this design compared to prior art is that this design uses elastomer contacts to both seal and scrape (at different locations) in the application and will allow the seals to be flexible.

This seal design will allow the seal to have some flexibility that will allow for the design to seal and scrape against the tolerances of the application. Another advantage is that by having the sealing lip draft away from the sealing point, you get the benefits of an elastomer contact seal but with less contact which will lower friction.

The scraper will be an elastomer seal that will be sealing against the crest (major diameter) of the screw thread and sealing in the axial direction. As the screw turns, the scraper will scrape the ice off the major diameter as it turns. There will also be a secondary sealing/scraping component that works in the root (minor diameter) of the screw thread in the radial direction. This will allow the ice and debris to be scraped off the minor diameter of the seal as the screw turns.

The present invention is designed to be lower contact with the surface to promote lower drag sealing as compared to prior art designs. The sealing lip that works in the root of the thread in the radial direction is designed with a draft away from the sealing edge. This will allow the seal to have some room to deform which will allow a lower friction force and lower drag as the ball screw rotates.

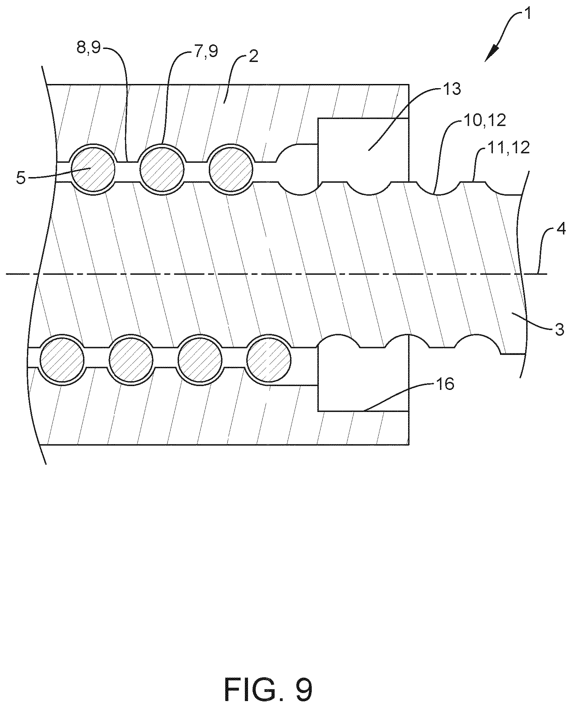

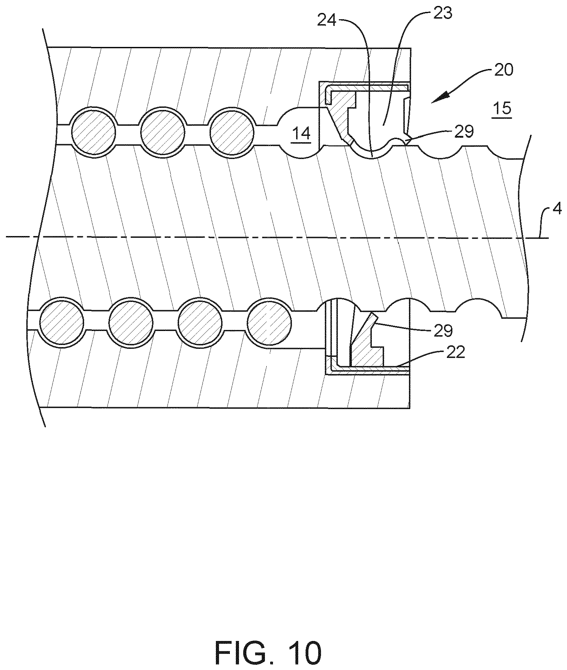

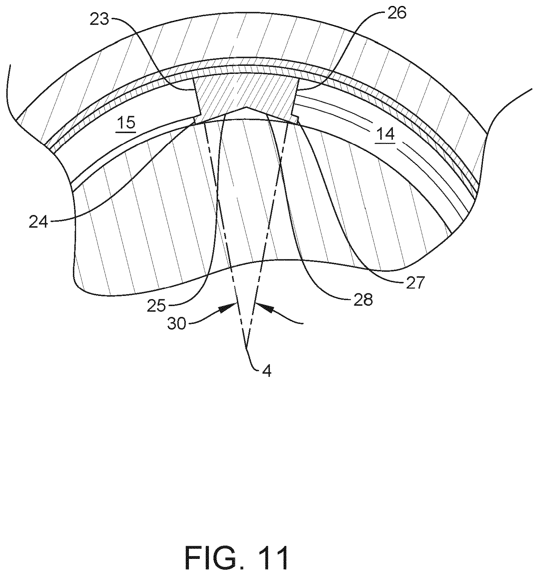

FIGURES 1-8 of the present application illustrate an embodiment of a wiper seal assembly 20 of the present invention. To aid in further understanding of the invention FIGURES 9-11 show additional views. FIGURE 9 is a simplified sectional view of a ball screw actuator without a wiper seal assembly. FIGURE 10 is similar to the simplified sectional view of the ball screw actuator now with an embodiment of a wiper seal assembly of the present invention. FIGURE 11 is a theoretical sectional view taken along the helical thread of the ball screw actuator showing the first and second arcuate surfaces for a better understanding.

Jumping to FIG. 9, a ball screw actuator 1 is configured to have an outer housing 2 with a shaft 3 disposed therein. Both the outer housing and the shaft are disposed about a longitudinal axis 4. A plurality of roller balls 5 are movably captured within a roller ball screw thread 6. The roller ball screw thread has an outer helical raceway 7 divided by an outer helical crest 8 which are formed in an inside surface 9 of the outer housing. The roller ball screw thread also has an inner helical raceway 10 divided by an inner helical crest 11 which are formed in the outer surface 12 of the shaft. An annular channel 13 is formed in the outer housing such that the present invention may be placed within. FIG. 10 shows the wiper seal assembly 20 of the present invention installed in the annular channel 13.

The wiper seal assembly comprises an annularly shaped elastomeric seal element 21 disposed about the longitudinal axis configured to separate a grease side 14 from an environmental side 15. The wiper seal assembly also includes an annularly shaped internal support 22 disposed about the longitudinal axis and disposed at least partially within the seal element. The seal element may be made of PTFE, unfilled PTFE, blended PTFE, glass moly filled PTFE, PEEK and/or thermoplastic material.

The seal element comprises a first arcuate surface 23 configured to be disposed in the inner helical raceway of the shaft and facing the environmental side. A first arcuate lip 24 extends from the first arcuate surface towards the environmental side and is configured to make contact with the inner helical raceway of the shaft. A first tapered backside 25 extends away from the first arcuate surface in an opposite direction of the first arcuate lip. The first tapered backside is configured to draft away from the inner helical raceway as it moves further from the first arcuate surface.

A second arcuate surface 26 is configured to be disposed in the inner helical raceway of the shaft and facing the grease side. A second arcuate lip 27 extends from the second arcuate surface towards the grease side and is configured to make contact with the inner helical raceway of the shaft. A second tapered backside 28 extends away from the second arcuate surface in an opposite direction of the second arcuate lip. The second tapered backside is configured to draft away from the inner helical raceway as it moves further from the second arcuate surface. The first tapered backside merges into and connects to the second tapered backside.

An ice scraper seal 29 faces the environmental side and is configured to make contact in at least 360 degrees around the longitudinal axis to or near the inner helical crest of the shaft. In combination, the first arcuate surface, the second arcuate surface and the ice scraper are configured to seal the environmental side apart from the grease side when the wiper seal assembly is installed in the ball screw actuator.

As shown in FIG. 11 the first arcuate surface 23 is disposed opposite the second arcuate surface 26, where they are separated by an angle 30, which angle is about 20 degrees. In other embodiments, the angle 30 may be less than 45 degrees and less than 25 degrees.

The seal element material is also disposed on the outside surface 31 to form a thin layer 32. This this layer 32 can then form a seal to the inside surface 16 of the annular channel 13. Furthermore, the internal support 22 in cross section can be L-shaped, such that it has a first portion 33 that is perpendicular to a second portion 34. The L-shape of the internal support creates rigidity to the overall wiper seal assembly.

The seal element 21 of the wiper seal assembly can also extend to a grease side end and an environmental side end as best shown in FIG. 4.

The seal element 21 of the wiper seal assembly can be over-molded to the internal support 22 to create a good bonding between the different materials. Alternatively, the seal element 21 could be bonded or adhered to the internal support.

### Numerals:

- 1: ball screw actuator
- 2: outer housing
- 3: shaft
- 4: longitudinal axis
- 5: plurality of roller balls
- 6: roller ball screw thread
- 7: outer helical raceway
- 8: outer helical crest
- 9: inside surface
- 10: inner helical raceway
- 11: inner helical crest
- 12: outer surface
- 13: annular channel
- 14: grease side
- 15: environmental side
- 16: inside surface, annular channel, outer housing
- 20: wiper seal assembly
- 21: seal element
- 22: internal support
- 23: first arcuate surface
- 24: first arcuate lip
- 25: first tapered backside
- 26: second arcuate surface
- 27: second arcuate lip
- 28: second tapered backside
- 29: ice scraper seal
- 30: angle
- 31: outside surface, internal support
- 32: thin layer, seal element
- 33: first portion, internal support
- 34: second portion, internal support
- 35: grease side end, seal element
- 36: environmental side end, seal element

## Claims

1. A wiper seal assembly (20) for sealing a ball screw actuator (1), comprising:
a ball screw actuator (1) having an outer housing (2) with a shaft (3) disposed therein, wherein both the outer housing (2) and the shaft (3) are disposed about a longitudinal axis (4), and a plurality of roller balls (5) are movably captured within a roller ball screw thread (6), the roller ball screw thread (6) having an outer helical raceway (7) divided by an outer helical crest (8) which are formed in an inside surface (9) of the outer housing (2) and an inner helical raceway (10) divided by an inner helical crest (11) which are formed in the outer surface (12) of the shaft (3), the wiper seal assembly comprises:
an annularly shaped elastomeric seal element (21) disposed about the longitudinal axis (4) configured to separate a grease side (14) from an environmental side (15)
wherein the seal element (21) comprises:
a first arcuate surface (23) configured to be disposed in the inner helical raceway (10) of the shaft (3) and facing the environmental side (15);
a second arcuate surface (26) disposed in the inner helical raceway (10) of the shaft (3) and facing the grease side (14);
an ice scraper seal (29) facing the environmental side (15) and making contact in at least 360 degrees around the longitudinal axis (4) to or near the inner helical crest (11) of the shaft (3);
a first arcuate lip (24) extending from the first arcuate surface (23) towards the environmental side (15) and configured to make contact with the inner helical raceway (10) of the shaft (3);
wherein the first arcuate surface (23), the second arcuate surface (26) and the ice scraper seal (29) are configured to seal the environmental side (15) apart from the grease side (14) when the wiper seal assembly (20) is installed in the ball screw actuator (1);
**characterized by** an annularly shaped internal support (22) disposed about the longitudinal axis (4) and disposed at least partially within the seal element (21), wherein the seal element (21) includes a first tapered backside (25) extending away from the first arcuate surface (23) in an opposite direction of the first arcuate lip (24), the first tapered backside (25) configured to draft away from the inner helical raceway (10) as it moves further from the first arcuate surface (23).

2. The wiper seal assembly of claim 1, wherein the seal element (21) has a Shore A hardness durometer range of 75 to 90.

3. The wiper seal assembly of claim 1, wherein the seal element (21) is made of PTFE, unfilled PTFE, blended PTFE, glass moly filled PTFE, PEEK and/or thermoplastic material.

4. The wiper seal assembly of claim 1, wherein the internal support (22) and the seal element (21) are not made of the same materials.

5. The wiper seal assembly of claim 1, wherein the internal support (22) is made of metal, plastic, composites and/or combinations thereof.

6. The wiper seal assembly of claim 1, wherein the seal element (21) is an over-mold about the internal support (22).

7. The wiper seal assembly of claim 1, wherein the seal element (21) is bonded and/or adhered to the internal support (22).

8. The wiper seal assembly of claim 1, wherein the internal support (22) in cross-section taken through the longitudinal axis (4) has an L-shape.

9. The wiper seal assembly of claim 1, including a second arcuate lip (27) extending from the second arcuate surface (26) towards the grease side (14) and configured to make contact with the inner helical raceway (10) of the shaft (3).

10. The wiper seal assembly of claim 9, including a second tapered backside (28) extending away from the second arcuate surface (26) in an opposite direction of the second arcuate lip (27), the second tapered backside(28) configured to draft away from the inner helical raceway (10) as it moves further from the second arcuate surface (26).

11. The wiper seal assembly of claim 10, wherein the first tapered backside (25) connects to the second tapered backside (28).

12. The wiper seal assembly of claim 11, wherein the first arcuate surface (23) and the second arcuate surface (26) are less than 45 degrees apart about the longitudinal axis (4).

13. The wiper seal assembly of claim 11, wherein the first arcuate surface (23) and the second arcuate surface (26) are less than 25 degrees apart about the longitudinal axis (4).

14. The wiper seal assembly of claim 13, wherein the first arcuate surface (23) and the second arcuate surface (26) are 20 degrees apart about the longitudinal axis (4).

15. The wiper seal assembly of claim 1, including a layer (32) of seal element (21) disposed on an outside surface (31) of the internal support (22).

## Patentansprüche

1. Abstreiferdichtungsanordnung (20) zum Abdichten eines Kugelgewindetriebs (1), umfassend:
einen Kugelgewindetrieb (1) mit einem Außengehäuse (2), in dem eine Welle (3) angeordnet ist, wobei sowohl das Außengehäuse (2) als auch die Welle (3) um eine Längsachse (4) angeordnet sind und eine Vielzahl von Rollkugeln (5) beweglich in einem Rollkugel-Schraubgewinde (6) gehalten sind, wobei das Rollkugel-Schraubgewinde (6) eine durch einen äußeren spiralförmigen Scheitel (8) unterteilte äußere spiralförmige Laufbahn (7), die in einer Innenfläche (9) des Außengehäuses (2) ausgebildet sind, sowie eine durch einen inneren spiralförmigen Scheitel (11) unterteilte innere spiralförmige Laufbahn (10), die in der Außenfläche (12) der Welle (3) ausgebildet sind, aufweist,
wobei die Abstreiferdichtungsanordnung umfasst:
ein ringförmiges Elastomer-Dichtungselement (21), das um die Längsachse (4) angeordnet ist und dazu ausgebildet ist, eine Fettseite (14) von einer Umgebungsseite (15) zu trennen,
wobei das Dichtungselement (21) umfasst:
eine erste bogenförmige Fläche (23), die so ausgebildet ist, dass sie in der inneren spiralförmigen Laufbahn (10) der Welle (3) angeordnet ist und der Umgebungsseite (15) zugewandt ist;
eine zweite bogenförmige Fläche (26), die in der inneren spiralförmigen Laufbahn (10) der Welle (3) angeordnet ist und der Fettseite (14) zugewandt ist;
eine Eiskratzerdichtung (29), die der Umgebungsseite (15) zugewandt ist und über mindestens 360 Grad um die Längsachse (4) herum mit dem oder nahe dem inneren spiralförmigen Scheitel (11) der Welle (3) in Kontakt steht;
eine erste bogenförmige Lippe (24), die sich von der ersten bogenförmigen Fläche (23) in Richtung der Umgebungsseite (15) erstreckt und so ausgebildet ist, dass sie mit der inneren spiralförmigen Laufbahn (10) der Welle (3) in Kontakt steht;
wobei die erste bogenförmige Fläche (23), die zweite bogenförmige Fläche (26) und die Eiskratzerdichtung (29) so ausgebildet sind, dass sie die Umgebungsseite (15) von der Fettseite (14) abdichten, wenn die Abstreiferdichtungsanordnung (20) in dem Kugelgewindetrieb (1) eingebaut ist;
**gekennzeichnet durch** eine ringförmige innere Stütze (22), die um die Längsachse (4) herum angeordnet ist und zumindest teilweise innerhalb des Dichtungselements (21) angeordnet ist, wobei das Dichtungselement (21) eine erste, sich verjüngende Rückseite (25) beinhaltet, die sich von der ersten bogenförmigen Fläche (23) in einer der ersten bogenförmigen Lippe (24) entgegengesetzten Richtung erstreckt, wobei die erste sich verjüngende Rückseite (25) so ausgebildet ist, dass sie sich von der inneren spiralförmigen Laufbahn (10) wegzieht, je weiter sie sich von der ersten bogenförmigen Fläche (23) entfernt.

2. Abstreiferdichtungsanordnung nach Anspruch 1, wobei das Dichtungselement (21) eine Shore A Durometerhärte in einem Bereich von 75 bis 90 aufweist.

3. Abstreiferdichtungsanordnung nach Anspruch 1, wobei das Dichtungselement (21) aus PTFE, ungefülltem PTFE, gemischtem PTFE, mit Glas-Molybdän gefülltem PTFE, PEEK und/oder einem thermoplastischen Material gefertigt ist.

4. Abstreiferdichtungsanordnung nach Anspruch 1, wobei die innere Stütze (22) und das Dichtungselement (21) nicht aus denselben Materialien gefertigt sind.

5. Abstreiferdichtungsanordnung nach Anspruch 1, wobei die innere Stütze (22) aus Metall, Kunststoff, Verbundwerkstoffen und/oder Kombinationen davon gefertigt ist.

6. Abstreiferdichtungsanordnung nach Anspruch 1, wobei das Dichtungselement (21) eine um die innere Stütze (22) herum gebildete Umspritzung ist.

7. Abstreiferdichtungsanordnung nach Anspruch 1, wobei das Dichtungselement (21) mit der inneren Stütze (22) verbunden und/oder an dieser angeklebt ist.

8. Abstreiferdichtungsanordnung nach Anspruch 1, wobei die innere Stütze (22) im Querschnitt durch die Längsachse (4) eine L-Form aufweist.

9. Abstreiferdichtungsanordnung nach Anspruch 1, umfassend eine zweite bogenförmige Lippe (27), die sich von der zweiten bogenförmigen Fläche (26) in Richtung der Fettseite (14) erstreckt und so ausgebildet ist, dass sie mit der inneren spiralförmigen Laufbahn (10) der Welle (3) in Kontakt kommt.

10. Abstreiferdichtungsanordnung nach Anspruch 9, umfassend eine zweite sich verjüngende Rückseite (28), die sich von der zweiten bogenförmigen Fläche (26) in einer der zweiten bogenförmigen Lippe (27) entgegengesetzten Richtung erstreckt, wobei die zweite sich verjüngende Rückseite (28) so ausgebildet ist, dass sie sich von der inneren spiralförmigen Laufbahn (10) wegzieht, je weiter sie sich von der zweiten bogenförmigen Fläche (26) entfernt.

11. Abstreiferdichtungsanordnung nach Anspruch 10, wobei die erste sich verjüngende Rückseite (25) an die zweite sich verjüngende Rückseite (28) anschließt.

12. Abstreiferdichtungsanordnung nach Anspruch 11, wobei die erste bogenförmige Fläche (23) und die zweite bogenförmige Fläche (26) um die Längsachse (4) einen Winkel von weniger als 45 Grad bilden.

13. Abstreiferdichtungsanordnung nach Anspruch 11, wobei die erste bogenförmige Fläche (23) und die zweite bogenförmige Fläche (26) um die Längsachse (4) einen Winkel von weniger als 25 Grad bilden.

14. Abstreiferdichtungsanordnung nach Anspruch 13, wobei die erste bogenförmige Fläche (23) und die zweite bogenförmige Fläche (26) um die Längsachse (4) einen Winkel von 20 Grad bilden.

15. Abstreiferdichtungsanordnung nach Anspruch 1, umfassend eine Schicht (32) aus einem Dichtungselement (21), die auf einer Außenfläche (31) der inneren Stütze (22) angeordnet ist.

## Revendications

1. Ensemble de joint racleur (20) pour l'étanchéité d'un actionneur à vis à billes (1), comprenant :
un actionneur à vis à billes (1) ayant un carter extérieur (2) avec un arbre (3) disposé à l'intérieur, dans lequel le carter extérieur (2) et l'arbre (3) sont tous deux disposés autour d'un axe longitudinal (4), et une pluralité de billes roulantes (5) sont capturées de manière mobile dans un filet de vis à billes roulantes (6), le filet de vis à billes roulantes (6) ayant un chemin de roulement hélicoïdal extérieur (7) divisé par une crête hélicoïdale extérieure (8) qui sont formés dans une surface interne (9) du carter extérieur (2) et un chemin de roulement hélicoïdal intérieur (10) divisé par une crête hélicoïdale intérieure (11) qui sont formés dans la surface externe (12) de l'arbre (3), l'ensemble de joint racleur comprend :
un élément d'étanchéité élastomère de forme annulaire (21) disposé autour de l'axe longitudinal (4) configuré pour séparer un côté graisse (14) d'un côté environnemental (15) lequel élément d'étanchéité (21) comprend :
une première surface arquée (23) configurée pour être disposée dans le chemin de roulement hélicoïdal intérieur (10) de l'arbre (3) et faisant face au côté environnemental (15) ;
une seconde surface arquée (26) disposée dans le chemin de roulement hélicoïdal intérieur (10) de l'arbre (3) et faisant face au côté graisse (14) ;
un joint racleur de glace (29) faisant face au côté environnemental (15) et entrant en contact sur au moins 360 degrés autour de l'axe longitudinal (4) avec ou à proximité de la crête hélicoïdale intérieure (11) de l'arbre (3) ;
une première lèvre arquée (24) s'étendant à partir de la première surface arquée (23) vers le côté environnemental (15) et configurée pour entrer en contact avec le chemin de roulement hélicoïdal intérieur (10) de l'arbre (3) ;
dans lequel la première surface arquée (23), la seconde surface arquée (26) et le joint racleur de glace (29) sont configurés pour étancher le côté environnemental (15) séparément du côté graisse (14) lorsque l'ensemble de joint racleur (20) est installé dans l'actionneur à vis à billes (1); **caractérisé par** un support interne de forme annulaire (22) disposé autour de l'axe longitudinal (4) et disposé au moins partiellement à l'intérieur de l'élément d'étanchéité (21), dans lequel l'élément d'étanchéité (21) comprend une première face arrière conique (25) s'étendant à l'opposé de la première surface arquée (23) dans une direction opposée à la première lèvre arquée (24), la première face arrière conique (25) étant configurée pour s'éloigner (par conicité) du chemin de roulement hélicoïdal intérieur (10) à mesure qu'elle s'éloigne de la première surface arquée (23).

2. Ensemble de joint racleur selon la revendication 1, dans lequel l'élément d'étanchéité (21) présente une plage de dureté Shore A du duromètre de 75 à 90.

3. Ensemble de joint racleur selon la revendication 1, dans lequel l'élément d'étanchéité (21) est constitué de PTFE, PTFE non chargé, PTFE mélangé, PTFE chargé verre-molybdène, PEEK et/ou matériau thermoplastique.

4. Ensemble de joint racleur selon la revendication 1, dans lequel le support interne (22) et l'élément d'étanchéité (21) ne sont pas constitués des mêmes matériaux.

5. Ensemble de joint racleur selon la revendication 1, dans lequel le support interne (22) est constitué de métal, plastique, composites et/ou combinaisons de ceux-ci.

6. Ensemble de joint racleur selon la revendication 1, dans lequel l'élément d'étanchéité (21) est un surmoulage autour du support interne (22).

7. Ensemble de joint racleur selon la revendication 1, dans lequel l'élément d'étanchéité (21) est lié et/ou adhéré au support interne (22).

8. Ensemble de joint racleur selon la revendication 1, dans lequel le support interne (22), en coupe prise selon l'axe longitudinal (4), présente une forme en L.

9. Ensemble de joint racleur selon la revendication 1, comprenant une seconde lèvre arquée (27) s'étendant à partir de la seconde surface arquée (26) vers le côté graisse (14) et configurée pour entrer en contact avec le chemin de roulement hélicoïdal intérieur (10) de l'arbre (3).

10. Ensemble de joint racleur selon la revendication 9, comprenant une seconde face arrière conique (28) s'étendant à l'opposé de la seconde surface arquée (26) dans une direction opposée à la seconde lèvre arquée (27), la seconde face arrière conique (28) étant configurée pour s'éloigner (par conicité) du chemin de roulement hélicoïdal intérieur (10) à mesure qu'elle s'éloigne de la seconde surface arquée (26).

11. Ensemble de joint racleur selon la revendication 10, dans lequel la première face arrière conique (25) relie la seconde face arrière conique (28).

12. Ensemble de joint racleur selon la revendication 11, dans lequel la première surface arquée (23) et la seconde surface arquée (26) sont séparées de moins de 45 degrés autour de l'axe longitudinal (4).

13. Ensemble de joint racleur selon la revendication 11, dans lequel la première surface arquée (23) et la seconde surface arquée (26) sont séparées de moins de 25 degrés autour de l'axe longitudinal (4).

14. Ensemble de joint racleur selon la revendication 13, dans lequel la première surface arquée (23) et la seconde surface arquée (26) sont séparées de 20 degrés autour de l'axe longitudinal (4).

15. Ensemble de joint racleur selon la revendication 1, comprenant une couche (32) de l'élément d'étanchéité (21) disposée sur une surface externe (31) du support interne (22).
